# EUROPEAN PATENT APPLICATION

(11) **EP 4 794 444 A1**
(43) Date of publication of application: **19.08.2026**
(21) Application number: 25831967.2
(22) Date of filing: 06.06.2025
(51) Int. Cl.: H04W 76/15

(54) **MULTI-LINK COMMUNICATION METHOD AND APPARATUS, AND COMPUTER-READABLE MEDIUM AND ELECTRONIC DEVICE**

(30) Priority: 04.07.2024 CN 202410895734
(71) Applicant: Tencent Technology (Shenzhen) Company Limited, Shenzhen, Guangdong 518057 (CN)
(72) Inventor: XIE, Qiang, Shenzhen, Guangdong 518057 (CN)
(74) Representative: AWA Sweden AB
(86) International application number: PCT/CN2025/099513
(87) International publication number: WO 2026/007613

(57) **Abstract**

Provided in the embodiments of the present application are a multi-link communication method and apparatus, and a computer-readable medium and an electronic device. The multi-link communication method comprises: a medium access control (MAC) layer of a multi-link device generating a first request frame, wherein the first request frame is used for requesting the initiation of multi-link transmission for a data packet of a specified type between the multi-link device and a peer multi-link device; and the MAC layer of the multi-link device sending the first request frame to the peer multi-link device.

## Description

### RELATED APPLICATION

This application claims priority to Chinese Patent Application No. 202410895734.4, filed with the China National Intellectual Property Administration on July 4, 2024, and entitled "MULTI-LINK COMMUNICATION METHOD AND APPARATUS, COMPUTER-READABLE MEDIUM, AND ELECTRONIC DEVICE", which is incorporated herein by reference in its entirety.

### FIELD OF THE TECHNOLOGY

The present disclosure relates to the field of computer and communication technologies, and specifically, to a multi-link communication method and apparatus, a computer-readable medium, and an electronic device.

### BACKGROUND OF THE DISCLOSURE

Next-generation wireless local area network (WLAN) standards develop and evolve to continuously increase throughput. WLAN system standards are mainly researched and discussed in the institute of electrical and electronics engineers (IEEE) 802.11 standard group. Based on previous standard protocols such as 802.11 a/b/g/n/ac/ax, a next-generation standard 802.11be sets extremely high throughput (EHT) as a technical target.

### SUMMARY

Embodiments of the present disclosure provide a multi-link communication method and apparatus, a computer-readable medium, and an electronic device, to improve transmission efficiency and reliability of a service data packet having a high real-time requirement.

Other features and advantages of the present disclosure become clear through the following detailed description, or partially learned through a practice of the present disclosure.

Embodiments of the present disclosure provide a multi-link communication method, performed by a multi-link device, including: a media access control (MAC) layer of the multi-link device generates a first request frame, the first request frame being configured for requesting to start multi-link transmission for a data packet of a specified type between the multi-link device and a peer multi-link device; and the MAC layer of the multi-link device transmits the first request frame to the peer multi-link device.

Embodiments of the present disclosure provide a multi-link communication method, performed by a multi-link device, including: a media access control (MAC) layer of the multi-link device receives a first request frame transmitted by a peer multi-link device, the first request frame being configured for requesting to start multi-link transmission for a data packet of a specified type between the peer multi-link device and the multi-link device; the MAC layer of the multi-link device generates a response frame for the first request frame, the response frame being configured for indicating whether the multi-link device allows to start the multi-link transmission for the data packet of the specified type; and the MAC layer of the multi-link device transmits the response frame to the peer multi-link device.

Embodiments of the present disclosure provide a multi-link communication apparatus, including: a generation unit, configured to generate a first request frame at a media access control (MAC) layer of the multi-link communication apparatus, the first request frame being configured for requesting to start multi-link transmission for a data packet of a specified type between the multi-link communication apparatus and a peer multi-link communication apparatus; and a transmitting unit, configured to transmit, through the MAC layer of the multi-link communication apparatus, the first request frame to the peer multi-link communication apparatus.

Embodiments of the present disclosure provide a multi-link communication apparatus, including: a receiving unit, configured to receive, at a media access control (MAC) layer of the multi-link communication apparatus, a first request frame transmitted by a peer multi-link communication apparatus, the first request frame being configured for requesting to start multi-link transmission for a data packet of a specified type between the peer multi-link communication apparatus and the multi-link communication apparatus; a generation unit, configured to generate, at the MAC layer of the multi-link communication apparatus, a response frame for the first request frame, the response frame being configured for indicating whether the multi-link communication apparatus allows to start the multi-link transmission for the data packet of the specified type; and a transmitting unit, configured to transmit, by the MAC layer of the multi-link communication apparatus, the response frame to the multi-link communication apparatus.

Embodiments of the present disclosure provide a computer-readable medium, having a computer program stored therein, the computer program, when being executed by a processor, implementing the multi-link communication method according to the foregoing embodiments.

Embodiments of the present disclosure provide an electronic device, including: one or more processors; and a storage apparatus, configured to store one or more computer programs, the one or more computer programs, when being executed by the one or more processors, enabling the electronic device to implement the multi-link communication method according to the foregoing embodiments.

Embodiments of the present disclosure provide a computer program product, the computer program product including a computer program, and the computer program being stored in a computer-readable storage medium. A processor of an electronic device reads and executes the computer program from the computer-readable storage medium, which starts the electronic device to perform the multi-link communication method provided in the foregoing various exemplary embodiments.

The foregoing general descriptions and the following detailed descriptions are merely exemplary and explanatory, and does not limit the present disclosure.

### BRIEF DESCRIPTION OF THE DRAWINGS

FIG. 1 is a schematic diagram of an architecture of a wireless communication system according to some embodiments of the present disclosure.
FIG. 2 is a flowchart of a multi-link communication method according to some embodiments of the present disclosure.
FIG. 3 is a flowchart of a multi-link communication method according to some embodiments of the present disclosure.
FIG. 4 is a schematic diagram of a structure of a packet header of an IP data packet according to some embodiments of the present disclosure.
FIG. 5 is a schematic diagram of fields included in MAC Capabilities according to some embodiments of the present disclosure.
FIG. 6 is a schematic diagram of fields included in a GDM Access element according to some embodiments of the present disclosure.
FIG. 7 is a schematic diagram of a definition of a GDM Access Flag according to some embodiments of the present disclosure.
FIG. 8 is a schematic diagram of a GDM access procedure according to some embodiments of the present disclosure.
FIG. 9 is a schematic diagram of a GDM tear down procedure according to some embodiments of the present disclosure.
FIG. 10 is a schematic diagram of a procedure for establishing multi-link GDM Access Enable between an AP MLD and a Non-AP MLD according to some embodiments of the present disclosure.
FIG. 11 is a schematic diagram of a procedure for establishing multi-link GDM Access Teardown between an AP MLD and a Non-AP MLD according to some embodiments of the present disclosure.
FIG. 12 is a block diagram of a multi-link communication apparatus according to some embodiments of the present disclosure.
FIG. 13 is a block diagram of a multi-link communication apparatus according to some embodiments of the present disclosure.
FIG. 14 is a schematic diagram of a structure of a computer system of an electronic device suitable for implementing some embodiments of the present disclosure.

### DESCRIPTION OF EMBODIMENTS

Now, exemplary implementations are described in a more comprehensive manner with reference to the accompanying drawings. However, the exemplary implementations may be implemented in various forms, and are not to be construed as being limited to these examples. On the contrary, provision of the implementations is intended to make the present disclosure more comprehensive and complete, and to comprehensively convey the idea of the exemplary implementations to a person skilled in the art. The term, involved in the following description, "some embodiments" describes subsets of all possible embodiments, but "some embodiments" may be the same subset or different subsets of all the possible embodiments and may be combined with each other without conflict.

Moreover, the described specific features, structures, or characteristics described in the present disclosure may be combined in one or more embodiments in any suitable manner. In the following description, a plurality of specific details are provided to fully understand embodiments of the present disclosure. However, a person skilled in the art is to be aware that, when the technical solutions of the present disclosure are implemented, not all detailed features in some embodiments need to be used, one or more specific details may be omitted, or another method, element, apparatus, operation, or the like may be used.

In some embodiments of the present disclosure, the term "module" or "unit" refers to a computer program or a part of a computer program having a predetermined function, and works together with other relevant parts to achieve a predetermined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

The block diagrams shown in the accompanying drawings are merely functional entities and do not necessarily correspond to physically independent entities. In other words, these functional entities may be implemented in a form of software, or implemented in one or more hardware modules or integrated circuits, or implemented in different networks and/or processor apparatuses and/or microcontroller apparatuses.

The flowcharts shown in the accompanying drawings are merely exemplary descriptions, do not necessarily include all content and operations/steps, and do not necessarily need to be performed in the described order. For example, some operations/steps may further be decomposed, and some operations/steps may be combined or partially combined. Therefore, an actual execution order may be changed based on an actual condition.

The "plurality of" mentioned in this specification means two or more. The "and/or" describes an association relationship for describing associated objects and represents that three relationships may exist. For example, A and/or B may represent the following three cases: only A exists, both A and B exist, and only B exists. The character "/" may represent an "or" relationship between the associated objects unless stated otherwise.

The technical solutions provided in some embodiments of the present disclosure may be applied to a wireless local area network (WLAN) system, and may be applicable to an IEEE 802.11 series of protocols such as an 802.11a/b/g protocol, an 802.11n protocol, an 802.11ac protocol, an 802.11ax protocol, an 802.11be protocol, or a next-generation protocol, which are not listed one by one herein. The technical solutions provided in some embodiments of the present disclosure may further be applied to various other communication systems, for example, an Internet of Things (IoT) system, a vehicle to X (V2X) system.

For some services (such as game services) having a high real-time requirement, to ensure transmission efficiency and reliability of game data, the game data is usually mapped to a high priority. In this case, if a plurality of games are simultaneously online, data transmission congestion and unreliability are inevitably caused. Therefore, how to ensure transmission reliability of a service data packet having a high real-time requirement is a technical problem that needs to be resolved urgently.

The technical solutions provided in some embodiments of the present disclosure may be implemented by a communication device in a communications system, or a chip or a processor in the communication device. The communication device may be a wireless communication device supporting parallel transmission of a plurality of links (e.g., supporting multi-link operation (MLO)). For example, the communication device may be referred to as a multi-link device (MLD) or a multi-band device. In comparison with a communication device supporting only single link transmission, the multi-link device has higher transmission efficiency and a greater throughput.

In the technical solutions provided in some embodiments of the present disclosure, a first request frame is generated, to request to use multi-link transmission for a data packet of a specified type, so that for a service having a high real-time requirement, the reliability of data transmission can be ensured by using the multi-link transmission, thereby improving transmission efficiency and reliability of service data packet when a network environment is poor or a transmission link is congested.

In some embodiments of the present disclosure, a next-generation 802.11 standard station device supporting a plurality of links simultaneously is referred to as a multi-link device. The multi-link device may be an access point multi-link device (AP MLD) or a non-access point multi-link device (Non-AP MLD). An internal entity responsible for any link is referred to as a station (STA). If all STAs within an MLD are access points (AP), the MLD may be further referred to as an AP MLD, and if all STAs within the MLD are non-access point stations (non-AP STA), the MLD may be further referred to as a non-AP MLD. In other words, the multi-link device includes one or more affiliated stations (affiliated STA). The affiliated station is a logical station that can operate on a link, a frequency band, or a channel. The affiliated station may be the AP or the non-AP STA. 802.11be refers to a multi-link device whose affiliated stations are APs as an AP multi-link device (AP MLD), and a multi-link device whose affiliated stations are non-AP STAs as a non-AP multi-link device (non-AP MLD).

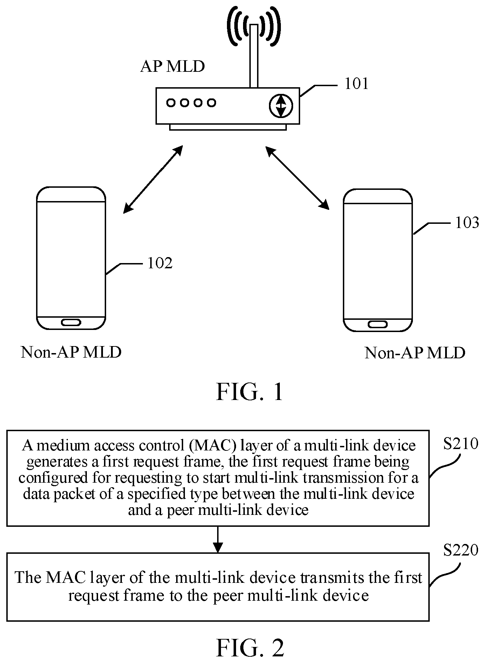

With reference to FIG. 1, in an exemplary wireless communication system, at least one AP MLD (for example, an AP MLD 101 in FIG. 1) and at least one non-AP MLD (for example, a non-AP MLD 102 and a non-AP MLD 103 in FIG. 1) are included. The non-AP MLD may communicate with the AP MLD by using a plurality of links, thereby improving a throughput rate. A STA in the non-AP MLD may alternatively communicate with an AP in the AP MLD through a single link. The numbers of AP MLDs and non-AP MLDs in FIG. 1 are merely exemplary, and there may be any number of AP MLDs and non-AP MLDs based on an implementation requirement.

For example, the multi-link device is an apparatus having a wireless communication function. The apparatus may be an integrated device, or may be a chip or a processing system installed in the integrated device. A device installed with such chip or processing system can implement methods and functions of some embodiments of the present disclosure under control of the chip or processing system. For example, the non-AP MLD in some embodiments of the present disclosure has a wireless transceiver function, can support the 802.11 series of protocols, and can communicate with a single-link AP, the AP MLD, or another non-AP MLD. For example, the non-AP MLD is any user communication device that allows a user to communicate with an AP and further communicate with a WLAN. For example, the non-AP MLD may be a user device that may be connected to a network such as a smart phone, a tablet computer, a laptop computer, a desktop computer, a smart television, a smart home device, an in-vehicle terminal, or an aircraft, or an Internet of Things node in the Internet of Things; or an in-vehicle communication apparatus in the Internet of Vehicles. The non-AP MLD may alternatively be a chip or a processing system in the foregoing terminals. The AP MLD in some embodiments of the present disclosure may be an apparatus that provides services for the non-AP MLD, and can support the 802.11 series of protocols. For example, the AP MLD may be a communication entity such as a communication server, a router, a switch, or a bridge. Alternatively, the AP may include various forms of a macro base station, a micro base station, a relay stations, and the like. Certainly, the AP may alternatively be a chip or a processing system in these various forms of devices, to implement the methods and functions of some embodiments of the present disclosure.

The multi-link device can support high-rate and low-latency transmission. With continuous evolution of wireless local area network application scenarios, the multi-link device may also be applied in more scenarios, for example, serving as sensor nodes in smart cities (such as smart water meters, smart electricity meters, and smart air detection nodes); smart devices in smart homes (such as smart cameras, projectors, display screens, televisions, speakers, refrigerators, and washing machines); smart devices in smart offices (such as printers and projectors); and some infrastructure in daily life scenarios (such as vending machines, self-service navigation kiosks in supermarkets, self-service checkout equipment, and self-service ordering machines). Specific forms of the non-AP MLD and the AP are not limited in some embodiments of the present disclosure, and are merely exemplary descriptions herein. The 802.11 protocol may be a protocol supporting or compatible with 802.11be.

Although some embodiments of the present disclosure are described mainly using the WLAN, and in particular, an example in which a network is applied to IEEE 802.11 series of standards is used for description. A person skilled in the art easily understands that, various aspects related to some embodiments of the present disclosure may be extended to other networks using various standards or protocols.

Implementation details of the technical solutions of some embodiments of the present disclosure are described in detail below.

FIG. 2 is a flowchart of a multi-link communication method according to some embodiments of the present disclosure. The multi-link communication method may be performed by an apparatus having a wireless communication function. The apparatus having the wireless communication function may be the AP MLD or the non-AP MLD shown in FIG. 1. With reference to FIG. 2, the multi-link communication method includes at least S210 and S220. A detailed description is as follows:

S210: A medium access control (MAC) layer of a multi-link device generates a first request frame, the first request frame being configured for requesting to start multi-link transmission for a data packet of a specified type between the multi-link device and a peer multi-link device.

In some embodiments, the data packet of the specified type may be a low-latency data packet, for example, a multimedia service data packet such as a game service data packet, a virtual reality (VR) service data packet, an augmented reality (AR) service data packet, a mixed reality (MR) service data packet, an extended reality (XR) service data packet, an XR and media services (XRM) service data packet, or a cinematic reality (CR) service data packet.

In some embodiments, when receiving a current service data packet, the apparatus having the wireless communication function may determine, based on to a value of a specified flag bit included in a packet header of the current service data packet, whether the current service data packet is the data packet of the specified type. In some embodiments, the specified flag bit may be a flag bit in a type of service (TOS) field in the packet header. In some embodiments, the apparatus having the wireless communication function may be a multi-link device (MLD).

In some embodiments, the apparatus having the wireless communication function generally includes a station management entity (SME) layer, a medium access control (MAC) layer, and a physical (PHY) layer. Therefore, when generating the first request frame, the MLD MAC layer can receive an enable request transmitted by an SME of the MLD for performing the multi-link transmission on the data packet of the specified type. Then, the MLD MAC layer generates the first request frame based on the enable request.

In some embodiments, if the multi-link device initiating the enable request is an access point device (namely, an AP MLD), the enable request includes at least one of the following information: a MAC address of the peer multi-link device (that is, a target non-access point station device (namely, a non-AP MLD)), a dialog token configured for performing the multi-link transmission on the data packet of the specified type, and a parameter for performing the multi-link transmission on the data packet of the specified type.

In some embodiments, if the multi-link device initiating the enable request is a non-access point station device (namely, a non-AP MLD), the enable request includes at least one of the following information: a MAC address of the peer multi-link device (namely, an access point device associated with the station device (namely, an AP MLD)), and a dialog token configured for performing the multi-link transmission on the data packet of the specified type.

In some embodiments, the first request frame may include at least one of the following pieces of field information: a Category field configured for indicating a category of the first request frame, a Protected EHT Action field configured for indicating the first request frame to use a protected extremely high throughput action, a field configured for indicating a dialog token, and a field configured for indicating whether to start the multi-link transmission on the data packet of the specified type.

In some embodiments, when generating the first request frame, the apparatus having the wireless communication function may obtain a service access permission of a subscription service provider network (SSPN) for the data packet of the specified type, and generate the first request frame if it is determined, based on the service access permission, that the SSPN allows to perform the multi-link transmission on the data packet of the specified type.

Still refer to FIG. 2. S220: The MAC layer of the multi-link device transmits the first request frame to the peer multi-link device.

In some embodiments, if the first request frame is generated by an access point device (namely, an AP MLD), the access point device can transmit the first request frame to a non-access point station device (namely, a non-AP MLD). Alternatively, if the first request frame is generated by a non-access point station device (namely, a non-AP MLD), the station device can transmit the first request frame to an access point device (namely, an AP MLD), or may transmit the first request frame to another station device.

In some embodiments, after the apparatus having the wireless communication function transmits the first request frame, the MAC layer of the multi-link device may receive a response frame transmitted by the peer multi-link device for the first request frame, the response frame being configured for indicating whether the peer multi-link device allows to start the multi-link transmission for the data packet of the specified type.

In some embodiments, the response frame may include at least one of the following pieces of field information: a Category field configured for indicating a category of the response frame, a Protected EHT Action field configured for indicating the response frame to use the protected extremely high throughput action, a field configured for indicating the dialog token, a field configured for indicating whether to start the multi-link transmission for the data packet of the specified type, and a Status Code field configured for indicating a response result.

In some embodiments, the Status Code field may be configured for indicating that the multi-link transmission for the data packet of the specified type is allowed to be started; or the Status Code field may be configured for indicating that the multi-link transmission for the data packet of the specified type is rejected to be started; or the Status Code field may be configured for indicating a reason for rejecting to start the multi-link transmission for the data packet of the specified type; or the Status Code field may be configured for indicating that the multi-link transmission for the data packet of the specified type is rejected to be started, and indicating the reason for rejecting to start the multi-link transmission for the data packet of the specified type.

In some embodiments, after the apparatus having the wireless communication function receives the response frame for the first request frame, the MLD MAC layer may transmit, to the SME, an enable confirmation of performing the multi-link transmission on the data packet of the specified type. In some embodiments, the enable confirmation may include the Status Code field configured for indicating the response result. The Status Code field may be configured for indicating that the multi-link transmission for the data packet of the specified type is allowed to be started; or the Status Code field may be configured for indicating that the multi-link transmission for the data packet of the specified type is rejected to be started; or the Status Code field may be configured for indicating the reason for rejecting to start the multi-link transmission for the data packet of the specified type; or the Status Code field may be configured for indicating that the multi-link transmission for the data packet of the specified type is rejected to be started, and indicating the reason for rejecting to start the multi-link transmission for the data packet of the specified type.

In some embodiments, after the multi-link transmission is established for the data packet of the specified type (such as a low latency), when the multi-link device receives a service data packet, the MAC layer of the multi-link device determines, based on a value of a specified flag bit included in a packet header of the service data packet, whether the service data packet is the data packet of the specified type.

The multi-link transmission is performed on the service data packet when it is determined that the service data packet is the data packet of the specified type, the specified flag bit including a flag bit in a type of service (TOS) field in the packet header.

In the methods provided in some embodiments of the present disclosure, a flag bit in a packet header of a data packet (such as the TOS field) is identified, so that the MAC layer can quickly distinguish a low-latency data packet and automatically trigger multi-link parallel transmission, thereby reducing queuing and link switching delays. Further, the multi-link transmission is enabled only for the data packet of the specified type (such as a high priority), so that an ordinary data packet is prevented from occupying additional link resources, thereby improving overall bandwidth utilization. In addition, classification decision is implemented at the MAC layer without repeated intervention of an upper-layer protocol, thereby reducing processing overheads. This mechanism achieves low-latency and high-reliability transmission of key service data and maintains reasonable allocation of network resources.

In some embodiments, after the multi-link transmission is established for the data packet of the specified type, if the multi-link transmission needs to be stopped, the apparatus having the wireless communication function may generate a second request frame. The second request frame is configured for requesting to tear down the established multi-link transmission for the data packet of the specified type between the multi-link device and the peer multi-link device. Then, the second request frame may be transmitted.

In some embodiments of the present disclosure, the multi-link transmission for a specified service is actively stopped by using the second request frame, to avoid continuous occupation of a redundant link and release bandwidth resources for use by another service. Further, a tear down procedure is triggered only for a specific service type (such as end of a low-latency session), and a multi-link connection of another service is maintained, thereby achieving fine-grained resource management. In addition, the MAC layer generates a standardized control frame (that is, the second request frame), to ensure that the peer device synchronously tears down multi-link binding, thereby avoiding data packet disorder or a packet loss. The solutions in some embodiments of the present disclosure ensure transmission of the key service, and improve dynamic adaptability and overall resource utilization of a multi-link system.

In some embodiments, if the second request frame is generated by an access point device (namely, an AP MLD), the access point device may transmit the second request frame to a non-access point station device (namely, a non-AP MLD). Alternatively, if the second request frame is generated by a non-access point station device (namely, a non-AP MLD), the station device may transmit the second request frame to an access point device (namely, an AP MLD), or may transmit the second request frame to another station device

In some embodiments, when the second request frame is generated, a tear down request transmitted by the SME of the multi-link device for the multi-link transmission of the data packet of the specified type may be received. Then, the second request frame is generated based on the tear down request.

In some embodiments, if the multi-link device transmitting the second request frame is an access point device (namely, an AP MLD), the tear down request includes a MAC address of a non-access point station device (namely, a non-AP MLD).

In some embodiments, if the multi-link device transmitting the second request frame is a non-access point station device (namely, a non-AP MLD), the tear down request includes a MAC address of an access point device (namely, an AP MLD) associated with the station device. In some embodiments, in some scenarios, for example a session identifier is already established, when the tear down request needs to be transmitted to the associated access point device, the tear down request may not include the MAC address of the access point device (namely, the AP MLD) associated with the station device, thereby reducing signaling load and reducing frame overheads.

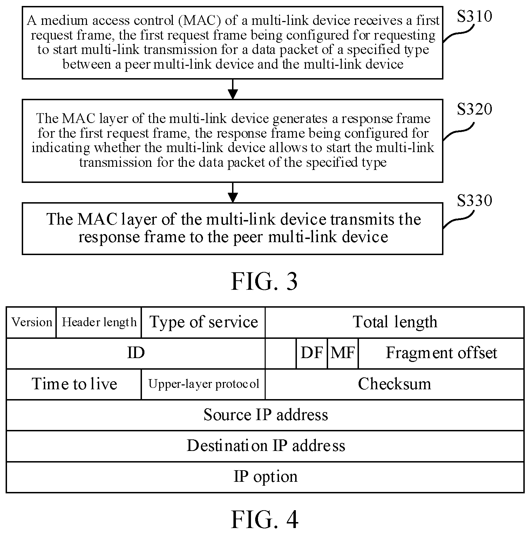

FIG. 3 is a flowchart of a multi-link communication method according to some embodiments of the present disclosure. The multi-link communication method may be performed by an apparatus having a wireless communication function. The apparatus having the wireless communication function may be the AP MLD or the non-AP MLD shown in FIG. 1. With reference to FIG. 3, the multi-link communication method includes at least S310 to S330. A detailed description is as follows:

S310: A medium access control (MAC) of a multi-link device receives a first request frame, the first request frame being configured for requesting to start multi-link transmission for a data packet of a specified type between a peer multi-link device and the multi-link device.

In some embodiments, the first request frame may include at least one of the following pieces of field information: a Category field configured for indicating a category of the first request frame, a Protected EHT Action field configured for indicating the first request frame to use a protected extremely high throughput action, a field configured for indicating a dialog token, and a field configured for indicating whether to start the multi-link transmission on the data packet of the specified type.

S320: The MAC layer of the multi-link device generates a response frame for the first request frame, the response frame being configured for indicating whether the multi-link device allows to start the multi-link transmission for the data packet of the specified type.

In some embodiments, the response frame may include at least one of the following pieces of field information: a Category field configured for indicating a category of the response frame, a Protected EHT Action field configured for indicating the response frame to use the protected extremely high throughput action, a field configured for indicating the dialog token, a field configured for indicating whether to start the multi-link transmission for the data packet of the specified type, and a Status Code field configured for indicating a response result.

In some embodiments, the Status Code field may be configured for indicating that the multi-link transmission for the data packet of the specified type is allowed to be started; or the Status Code field may be configured for indicating that the multi-link transmission for the data packet of the specified type is rejected to be started; or the Status Code field may be configured for indicating a reason for rejecting to start the multi-link transmission for the data packet of the specified type; or the Status Code field may be configured for indicating that the multi-link transmission for the data packet of the specified type is rejected to be started, and indicating the reason for rejecting to start the multi-link transmission for the data packet of the specified type.

In some embodiments, after the apparatus having the wireless communication function receives the first request frame, the MLD MAC layer may transmit an enable indication for performing the multi-link transmission on the data packet of the specified type to a station management entity (SME). If an enable response that is for performing the multi-link transmission on the data packet of the specified type and that is transmitted by the SME is received, the response frame for the first request frame is generated.

S330: The MAC layer of the multi-link device transmits the response frame to the peer multi-link device.

In some embodiments, if the response frame is generated by an access point device (namely, an AP MLD), the access point device may transmit the response frame to a non-access point station device (namely, a non-AP MLD) transmitting the first request frame. Alternatively, if the response frame is generated by a non-access point station device (namely, a non-AP MLD), the station device may transmit the response frame to an access point device (namely, an AP MLD) transmitting the first request frame, or may transmit the response frame to another station device transmitting the first request frame.

In some embodiments, after the multi-link transmission is established for the data packet of the specified type, if a second request frame configured for indicating to stop the multi-link transmission for the data packet of the specified service type is received, the MLD MAC layer may transmit, to the SME, a tear down indication for the multi-link transmission for the data packet of the specified service type.

In the foregoing embodiments, the first request frame and the second request frame may be management frames, or may be frames of another type.

The following describes the technical solutions of some embodiments of the present disclosure in detail by using an example in which the data packet of the specified type is a low-latency game data packet:

Because a game has a very high real-time requirement, for example, in the game, a player most cares about a shooting result of the player, survival of a character, and real-time update of various messages, which imposes a high requirement on transmission efficiency and reliability of underlying game data, and it is especially important to ensure the transmission efficiency and reliability of the game data. However, processing manners may map the game data to a high priority level, to be specific, all game operators map own game data to a high priority level based on traffic identifiers (TID). If games of a plurality of game operators are online simultaneously, data transmission congestion and unreliability are inevitably caused.

Based on the foregoing problems, the technical solutions of some embodiments of the present disclosure provide that after a connection at a data packet level is established between an access point (AP) (such as the AP-MLD) and a station (STA) (such as the Non-AP MLD), the AP and the STA each can perform the multi-link transmission or select another link transmission on a data packet of a low-latency service (such as the game service) based on respective wireless environment or service bearer status. For example, the technical solutions of some embodiments of the present disclosure can implement more elaborate multi-link transmission at the data packet level. The technical solutions of some embodiments of the present disclosure may be applied to 802.11be and subsequent standards.

As shown in FIG. 4, an IP packet header of an IP data packet of a game service includes the following fields:

Version: occupies 4 bits. It is configured for indicating a version of an IP protocol, and if the version is IPv4, the version is fixed to 4.

Header length: occupies 4 bits. It is configured for indicating a length of an IP header, and the unit is a word (that is, four bytes). Because a maximum value of a header length field is 15, a maximum length of the IP header is 60 bytes (15 × 4).

Type of service (TOS): occupies 8 bits. It is configured for defining different service types, and may provide different services for the IP data packet.

Total length: occupies 16 bits. It is configured for indicating a length of an entire IP data packet, including data and the IP header, so that a maximum length of the IP data packet is 65535 bytes.

ID: occupies 16 bits. It is configured for identifying different IP data packets. The field is used together with Flags and fragment offset fields, to perform a fragmentation operation on a large IP data packet.

Flags: occupies three bits. The first bit of the field is not used, and the second bit is a Don't Fragment (DF) bit. When the DF bit is set to 1, it indicates that a router cannot fragment the data packet. The third bit is a More Fragments (MF) bit, and indicates whether a current fragment is a last fragment of the IP data packet. If the current fragment is the last fragment, the current fragment is set to 0; otherwise, the current fragment is set to 1.

Fragment offset: occupies 13 bits. It is configured for indicating a position of the current fragment in an IP data packet fragment group, and a receiving end assembles and recovers the IP data packet based on the position of the current fragment in the IP data packet fragment group.

Time to live (TTL): occupies 8 bits. When the IP data packet is transmitted, a specific value is first assigned to the field. When the IP data packet passes through each router along a path, each router along the path reduces a TTL value of the IP data packet by 1. If the TTL is reduced to 0, the IP data packet is discarded. This field can prevent the IP data packet from being continuously forwarded in a network due to a routing loop.

Upper-layer protocol: occupies 8 bits. It identifies a protocol used at an upper-layer, such as a commonly used transmission control protocol (TCP) or user datagram protocol (UDP).

Checksum: occupies 16 bits. It is configured for detecting correctness of the IP header, but does not include a data part. Because each router needs to change the TTL value, the router recalculates the value for each passed IP data packet.

Source IP address and destination IP address: the two fields occupy 32 bits. The two fields identify a source IP address and a destination IP address of the IP data packet.

IP option: it is of a variable length and includes 40 bytes at most.

In an institute of electrical and electronics engineers (IEEE) protocol, mapping between a differentiated services code point (DSCP) and a traffic identifier (TID) only occupies upper 6 bits of the type of service (TOS) field in the IP header. The remaining lower 2 bits are reserved and not configured for other purposes. Therefore, the first bit can be used as a flag to identify a low-latency data packet. Then, an AP MLD and a Non-AP MLD establish multi-link transmission at a low-latency data packet level by using a signaling message. After receiving the IP data packet, a MAC layer parses the TOS field in the IP header to obtain a flag value, and then performs the multi-link transmission for the service data packet or selects a better link for transmission.

In some embodiments, to establish a multi-link at the data packet level between the AP MLD and the Non-AP MLD, three messages need to be newly added: Game Data Multi-Link Access Enable Request (GDM Access Enable Request), Game Data Multi-Link Access Enable Response (GDM Access Enable Response), and Game Data Multi-Link Access Teardown (GDM Access Teardown). In some embodiments, three new values need to be added to the Protected Action field, as shown in Table 1 below:

**Table 1**

| **Values** | **Meaning** | **Time priority** |
|---|---|---|
| ... | ... | ... |
| 13 (Newly added) | GDM Access Enable Request | No |
| 14 (Newly added) | GDM Access Enable Response | No |
| 15 (Newly added) | GDM Access Teardown | No |
| 16~255 | | |

In some embodiments, teardown may refer to stopping, cancelling, or eliminating the multi-link transmission access for a specified service type (e.g., game data). Teramdown may also refer to an opposite status of "enabled". In some embodiments, a definition of a game data multi-link access enable request frame may be as shown in Table 2 below:

**Table 2**

| **Order** | **Meaning** |
|---|---|
| 1 | Category |
| 2 | Protected EHT Action |
| 3 | Dialog Token |
| 4 | Game Data Multi-Link Access element |

The Category field in Table 2 is defined in an "Action field" section in a standard protocol. The Protected EHT Action field is defined in a "Protected EHC Action field" section of the standard protocol. In some embodiments of the present disclosure, three new values are added: GDM Access Enable Request, GDM Access Enable Response, and GDM Access Teardown. The Dialog Token field is defined in the "Dialog Token field" section of the standard protocol, and can be set to a non-zero value to distinguish a GDM Enable Access Request/Response frame. The Game Data Multi-link Access element is configured indicating whether to start game data multi-link transmission.

In some embodiments, if the game data multi-link access enable request frame includes the game data multi-link access element, it indicates that the game data multi-link transmission is enabled. If the game data multi-link access enable request frame does not include the game data multi-link access element, it indicates that the game data multi-link transmission is not enabled. Alternatively, different values may be set to indicate whether to start the game data multi-link transmission.

In some embodiments, a definition of the Game Data Multi-Link Access Enable Response frame may be shown in Table 3 below:

**Table 3**

| **Order** | **Meaning** |
|---|---|
| 1 | Category |
| 2 | Protected EHT Action |
| 3 | Dialog Token |
| 4 | Status Code |
| 5 | Game Data Multi-Link Access element |

The Category field in Table 3 is defined in the "Action field" section of the standard protocol. The Protected EHT Action field is defined in the "Protected EHT Action field" section of the standard protocol. In some embodiments of the present disclosure, the three new values are added: GDM Access Enable Request, GDM Access Enable Response, and GDM Access Teardown. As a response corresponding to a GDM access enable request frame, the Dialog Token field is set to a value in the game data multi-link access enable request frame. When a GDM access enable response frame is transmitted in an active mode, the Dialog Token field may be set to 0. The Status Code is defined in a "Status Code field" section of the standard protocol. When a GDM response frame is transmitted in an unsolicited mode, the Status Code may be set to 0.

The Game Data Multi-link Access element is configured indicating whether to start the game data multi-link transmission. In some embodiments, if the game data multi-link access enable request frame includes the game data multi-link Access element, it indicates that the game data multi-link transmission is enabled. If the game data multi-link access enable request frame does not include the Game Data Multi-Link Access element, it indicates that the game data multi-link transmission is not enabled. Alternatively, different values may be set to indicate whether to start the game data multi-link transmission.

In some embodiments, a definition of a Game Data Multi-Link Access Teardown frame may be shown in Table 4 below:

**Table 4**

| **Order** | **Meaning** |
|---|---|
| 1 | Category |
| 2 | Protected EHT Action |

The Category field in Table 4 is defined in the "Action field" section in the standard protocol. The Protected EHT Action field is defined in the "Protected EHT Action field" section of the standard protocol. In some embodiments of the present disclosure, the three new values are added: GDM Access Enable Request, GDM Access Enable Response, and GDM Access Teardown.

In some embodiments, for the Status Code, in embodiments of the present disclosure, three new Status Code values may be added to support GDM access, as shown in Table 5 below:

**Table 5**

| **Status Code** | **Name** | **Meaning** |
|---|---|---|
| ... | ... | ... |
| 142 | GDM_DENIED_UNAUTHORIZED | GDM access rejected because GDM access is not authorized |
| 143 | GDM_DENIED_OTHER_REASON | GDM access rejects for another reason |
| 145 | GDM_DENIED_VERIFATION_FAILURE | GDM access rejects because a receiving AP cannot verify that the Non-AP STA is authorized |

In another embodiment of the present disclosure, more Status Code values may be newly added to support the GDM access.

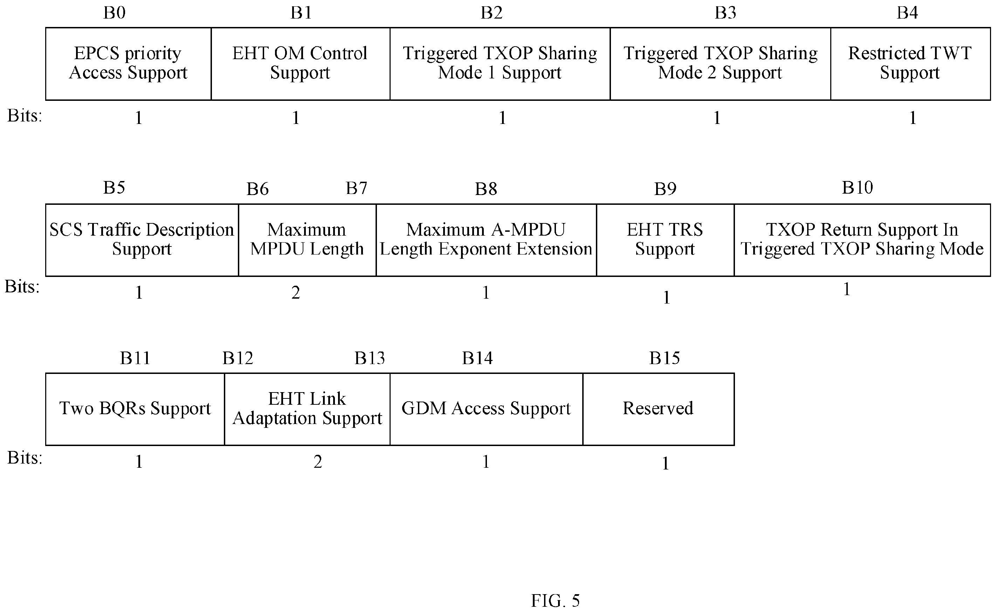

In some embodiments, a new field may be added to the MAC Capabilities to indicate support for GDM access by the AP MLD or the Non-AP MLD. For example, the fields included in the MAC Capabilities are shown in FIG. 5. In some embodiments, the fields include: emergency preparedness communications service (EPCS) priority access support, extremely high throughput operation mode control support (EHT OM Control Support), trigger transmission opportunity sharing mode 1 support (Triggered TXOP Sharing Mode 1 Support), trigger transmission opportunity sharing mode 2 support (Triggered TXOP Sharing Mode 2 Support), restricted target wake time Support, sub-carrier space traffic description support, maximum MPDU Length, maximum A-MPDU length exponent extension, EHT tracking reference signal support, TXOP return support in triggered TXOP sharing mode, two bandwidth query reports support (Two BQRs Support), EHT Link Adaptation Support, GDM access support, and reserved. The BQR refers to a bandwidth query report. TXOP refers to a transmission opportunity. MPDU refers to a MAC protocol data unit. A-MPDU refers to an aggregation MAC protocol data unit.

In the fields shown in FIG. 5, GDM access support is a newly added field in some embodiments of the present disclosure. To be specific, in some embodiments of the present disclosure, support for the GDM access can be added at bit B14; after the bit B14 is newly added as the GDM access support, the remaining bit B15 is a reserved bit.

In some embodiments, an element ID supporting the GDM access may be added, as shown in Table 6 below:

**Table 6**

| **Element** | **Element ID** | **Element ID Extension** | **Extensible** | **Fragmentable** |
|---|---|---|---|---|
| ... | ... | ... | ... | ... |
| GDM Access | 255 | 94 | No | No |
| Reserved | 255 | 95-255 | | |

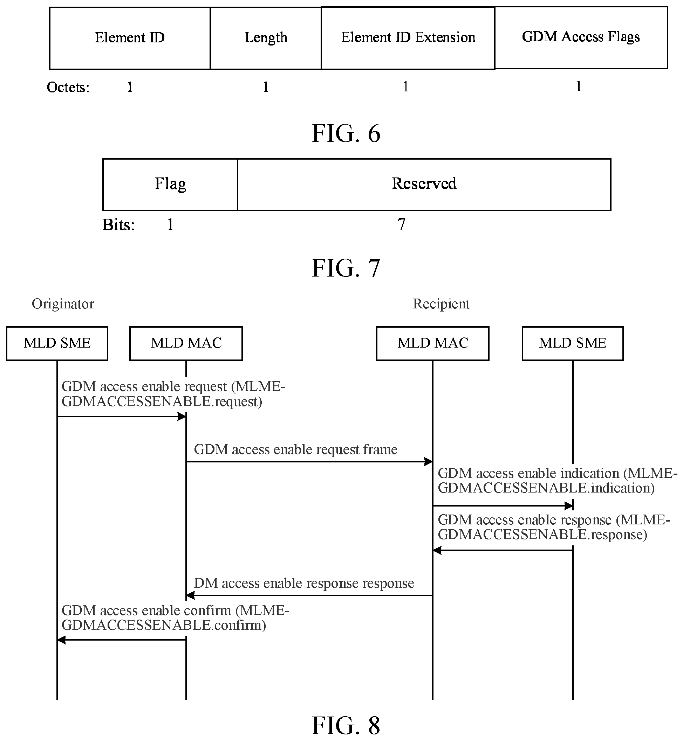

In some embodiments, a definition of a GDM access element is shown in FIG. 6, including: Element ID, Length, Element ID Extension, and GDM access flags.

In some embodiments, whether the GDM access flag supports multi-link transmission is defined as shown in FIG. 7, which can be indicated by a flag bit. For example, if a value of the flag bit is 1, it indicates support for the multi-link transmission. If the value of the flag bit is 0, it indicates that the multi-link transmission is not supported.

In some embodiments, a type supporting the GDM access may be added to a Multi-Link field in the Multi-Link element, as shown in Table 7 below:

**Table 7**

| **Type subfield value** | **Multi-link element variable name** | **Variant specific format** |
|---|---|---|
| ... | ... | ... |
| 5 (Newly added) | Game Data Multi-link Access | Game data Multi-Link Enable Access element |
| 6~7 | Reserved | |

Based on the newly added information in the above embodiments, the GDM access element can be carried in the Multi-Link element.

In some embodiments, six primitives may be added in the present disclosure to support the GDM Access: a GDM access enable request primitive (MLME-GDMACCESSENABLE.request), a GDM access enable indication primitive (MLME-GDMACCESSENABLE.indication), a GDM access enable response primitive (MLME-GDMACCESSENABLE.response), a GDM access enable confirmation primitive (MLME-GDMACCESSENABLE.confirm), a GDM access tear down request primitive (MLME-GDMACCESSTEARDOWN.request), and a GDM access teardown indication primitive (MLME-GDMACCESSTEARDOWN.indication). The MLME refers to the MAC layer management entity. The following is a description of each primitive.

In some embodiments, the MLME-GDMACCESSENABLE.request primitive is configured for initiating a request to a peer MAC entity to start the GDM access.

Primitive parameters are as follows:

```
           MLME-GDMACCESSENABLE. request (
                            PeerSTAAddress,
                            Dialog Token,
                            GDMAccessMultiLink
                            )
```

For related descriptions of the PeerSTAAddress, the Dialog Token, and the GDMAccessMultiLink, refer to the following Table 8:

**Table 8**

| **Name** | **Type** | **Valid range** | **Description** |
|---|---|---|---|
| PeerSTAAddress | MAC Address | Any valid individual MAC address | Specifies the address of the peer MAC entity with which the GDM Access procedure is performed. This parameter is optional when the primi tive is initiated by the SME of non-AP MLD and the PeerSTAAddress indicates the MAC address of the associated AP MLD.Otherwise, this parameter is present. |
| Dialog Token | Integer | 0 to 255 | The dialog token to identify the GDM access procedure. |
| GDMAccessMultiLink | GDM Access Multi-Link element | As defined in GDM Access Multi-Link element | Specifies the GDM Parameter s used by GDM access. This parameter is optionally present if the primitive is generated by an AP MLD, and not present otherwise |

The MLME-GDMACCESSENABLE. request primitive is generated by the SME, and is configured for transmitting a request to the peer MAC entity to start the GDM access.

In some embodiments, the MLME-GDMACCESSENABLE.confirm primitive is configured for reporting a response to a GDM access request of the peer MAC entity.

Primitive parameters are as follows:

```
           MLME-GDMACCESSENABLE. confirm (
                             PeerSTAAddress,
                             Dialog Token,
                             Status Code,
                             GDMAccessMultiLink
                             )
```

For related descriptions of the PeerSTAAddress, the Dialog Token, the Status Code, and the GDMAccessMultiLink, refer to the following Table 9:

**Table 9**

| **Name** | **Type** | **Valid range** | **Description** |
|---|---|---|---|
| PeerSTAAddress | MAC Address | Any valid individual MAC address | Specifies the address of the peer MAC entity with which the GDM Access procedure is performed. This parameter is optional when the primi tive is initiated by the SME of non-AP MLD and the PeerSTAAddress indicates the MAC address of the associated AP MLD.Otherwise, this parameter is present. |
| Dialog Token | Integer | 0 to 255 | The dialog token to identify the GDM access procedure. |
| Status Code | As defined in frame format | Status Code field | Indicates the status of the request procedure |
| GDMAccessMultiLink | GDM Access Multi-Link element | As defined in GDM Access Multi-Link element | Specifies the GDM Parameter used by GDM access. This parameter is optionally present if the primitive is generated by an AP MLD, and not present otherwise |

The MLME-GDMACCESSENABLE.confirm primitive is generated by MLME after the MLME receives a GDM access enable response frame from the peer MAC entity.

In some embodiments, the MLME-GDMACCESSENABLE.indication primitive indicates that a GDM access enable request has been received from the peer MAC entity.

Primitive parameters are as follows:

```
           MLME-GDMACCESSENABLE.indication (
                              PeerSTAAddress,
                              Dialog Token,
                              GDMAccessMultiLink
                              )
```

For related descriptions of the PeerSTAAddress, the Dialog Token, and the GDMAccessMultiLink, refer to the following Table 10:

**Table 10**

| **Name** | **Type** | **Valid range** | **Description** |
|---|---|---|---|
| PeerSTAAddress | MAC Address | Any valid individual MAC address | Specifies the address of the peer MAC entity with which the GDM Access procedure is performed. This parameter is optional when the primi tive is initiated by the SME of non-AP MLD and the PeerSTAAddress indicates the MAC address of the associated AP MLD.Otherwise, this parameter is present. |
| Dialog Token | Integer | 0 to 255 | The dialog token to identify the GDM access procedure. |
| GDMAccessMultiLink | GDM Access Multi-Link element | As defined in GDM Access Multi-Link element | Specifies the GDM Parameter used by GDM access. |

The MLME-GDMACCESSENABLE. indication primitive is generated by the MLME after the MLME receives a GDM access enable request frame from the peer MAC entity.

In some embodiments, the MLME-GDMACCESSENABLE.response primitive is generated by the MLME, and is configured for transmitting a response of enabling the GDM access to the peer MAC entity.

Primitive parameters are as follows:

```
           MLME-GDMACCESSENABLE.response (
                              PeerSTAAddress,
                              Dialog Token,
                              Status Code,
                              GDMAccessMultiLink
                              )
```

For related descriptions of the PeerSTAAddress, the Dialog Token, the Status Code, and the GDMAccessMultiLink, refer to the following Table 11:

**Table 11**

| **Name** | **Type** | **Valid range** | **Description** |
|---|---|---|---|
| PeerSTAAddress | MAC Address | Any valid individual MAC address | Specifies the address of the peer MAC entity with which the GDM Access procedure is performed. This parameter is optional when the primi tive is initiated by the SME of non-AP MLD and the PeerSTAAddress indicates the MAC address of the associated AP MLD.Otherwise, this parameter is present. |
| Dialog Token | Integer | 0 to 255 | The dialog token to identify the GDM access procedure. |
| Status Code | As defined in frmae format | Status Code field | Indicates the status of the request procedure |
| GDMAccessMultiLink | GDM Access Multi-Link element | As defined in GDM Access Multi-Link element | Specifies the GDM Parameter s used by GDM access. This parameter is optionally present if the primitive is generated by an AP MLD, and not present otherwise |

The MLME-GDMACCESSENABLE.response primitive is generated by the SME, and is used as a response to the MLME-GDMACCESSENABLE.indication primitive.

In some embodiments, the MLME-GDMACCESSTEARDOWN.request primitive is configured for indicating the peer MAC entity to tear down GDM access.

Primitive parameters are as follows:

```
           MLME-GDMACCESSTEARDOWN.request (
                                PeerSTAAddress,
                                )
```

For related descriptions of the PeerSTAAddress, refer to the following Table 12.

**Table 12**

| **Name** | **Type** | **Valid range** | **Description** |
|---|---|---|---|
| PeerSTAAddress | MAC Address | Any valid individual MAC address | Specifies the address of the peer MAC entity with which the GDM access procedure is performed. This parameter is optional when the primitive is initiated by the SME of non-AP MLD and the PeerSTAAddress indicates the MAC address of the associated AP MLD. Otherwise, this parameter is present. |

The MLME-GDMACCESSENABLE.response primitive is generated by the SME when the STA needs to torn down GDM access.

In some embodiments, the MLME-GDMACCESSTEARDOWN.indication primitive is configured for indicating the peer MAC entity to tear down the GDM access.

Primitive parameters are as follows:

```
           MLME-GDMACCESSTEARDOWN.indication (
                             PeerSTAAddress,
                             )
```

For related descriptions of the PeerSTAAddress, refer to the following Table 13:

**Table 13**

| **Name** | **Type** | **Valid range** | **Description** |
|---|---|---|---|
| PeerSTAAddress | MAC Address | Any valid individual MAC address | Specifies the address of the peer MAC entity with which the GDM access procedure is performed. This parameter is optional when the primitive is initiated by the SME of non-AP MLD and the PeerSTAAddress indicates the MAC address of the associated AP MLD. Otherwise, this parameter is present. |

The MLME-GDMACCESSTEARDOWN.indication primitive is generated by the MLME after the MLME receives a GDM access enable teardown frame from the peer MAC entity.

In some embodiments, to support GDM access, an abstract syntax notation one (ASN.1) message may be added in some embodiments of the present disclosure. In some embodiments, an ASN.1 message dot11EHTGDMAccessActivated (e.g., EHT GDM access activated) may be added to Dot11EHTStationConfigEntry (e.g., EHT station configuration entry), and the message may be set as an object type. In some embodiments, the dot11EHTGDMAccessActivated may be a control variable that is written by an external management entity or the SME. In an actual process, a change to the variable takes effect as soon as possible. When the attribute is true, it indicates that the MLD supports a GDM access capability. If the attribute is false, the MLD does not support the GDM access capability.

In some embodiments, an ASN.1 message dot11GDMAccessAuthorized (e.g., GDM access authorized) may also be added to Dot11InterworkingEntry (e.g., interworking entry), and the message may be set as the object type. In some embodiments, the dot11GDMAccessAuthorized may be a control variable that is written by the SME after the AP receives a permission from the non-AP STA to use the GDM access from an SSPN interface. When the attribute value is true, it indicates that the non-AP ST A is allowed to invoke and use the GDM access capability. If the attribute value is false, the non-AP ST A is not allowed to invoke and use the GDM access capability.

In some embodiments, the GDM access is initiated by the SME and established on the MAC. The GDM access between a GDM AP-MLD and an associated GDM Non-AP MLD thereof may be in one of two statuses: enabled or torn down. In some embodiments, both the AP MLD and the Non-AP MLD may set the dot11EHTGDMAccessActivated to true.

A STA affiliated with a GDM MLD sets a GDM Access Support subfield in a MAC Capabilities Information field transmitted by the STA to 1, to indicate support for the GDM access, and otherwise, it is set to 0. During (re)association, the AP MLD obtains information to verify that the Non-AP MLD can use the GDM access. In addition, the dot11SSPNInterfaceActivated may be set to true to support retrieving a GDM service access provider corresponding to the Non-AP MLD through the SSPN interface during association of the Non-AP MLD.

An AP MLD that successfully obtains permission for the Non-AP MLD to use the GDM access is to update a value of the dot11GDMAccessAuthorized for the Non-AP MLD in the dot11InterworkingEntry. If a robust security network association (RSNA) having management frame protection is not obtained, the RSNA is successfully negotiated and the GDM access is allowed, neither the AP MLD nor the Non-AP MLD can transmit a GDM access enable request frame to each other to initiate the GDM access.

Based on the description in the foregoing embodiment, in some embodiments of the present disclosure, as shown in FIG. 8, a GDM access procedure is as follows: an MLD SME of an originator (such as the AP MLD or the Non-AP MLD) transmits the MLME-GDMACCESSENABLE.request primitive to the MLD MAC of the originator when detecting a game data packet and determining that multi-link access is allowed. After receiving the primitive, the MLD MAC transmits a GDM access enable request frame to an MLD MAC of a recipient (such as the AP MLD or the Non-AP MLD), and then the MLD MAC of the recipient may transmit the MLME-GDMACCESSENABLE. indication primitive to an MLD SME of the recipient.

After receiving the MLME-GDMACCESSENABLE.indication primitive, the MLD SME of the responding transmits the MLME-GDMACCESSENABLE.response primitive to the MLD MAC of the recipient. After receiving the MLME-GDMACCESSENABLE.response primitive, the MLD MAC of the recipient may transmit the GDM access enable response frame to the MLD MAC of the originator, and then the MLD MAC of the originator transmits the MLME-GDMACCESSENABLE.confirm primitive to the MLD SME of the originator. In this case, if a response frame fed back by the recipient agrees to perform the GDM access, the GDM access procedure is completed between the originator and the recipient, so that the data packet of the game service can be transmitted by using a multi-link.

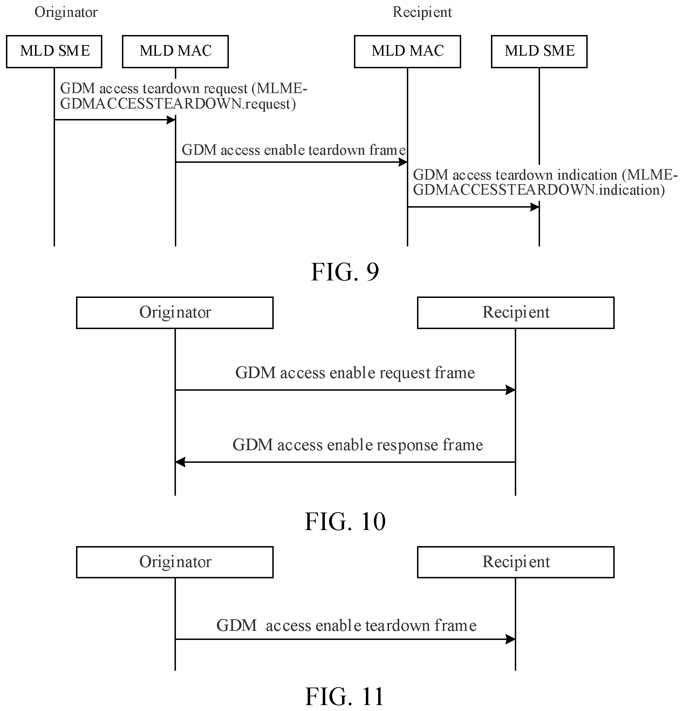

In some embodiments of the present disclosure, as shown in FIG. 9, a GDM Teardown process is: when it is determined to tear down the GDM access, the MLD SME of the initiator (such as the AP MLD or the Non-AP MLD) transmits the MLME-GDMACCESSTEARDOWN.request to the MLD MAC of the originator. After receiving the primitive, the MLD MAC transmits a GDM access enable teardown frame to the MLD MAC of the recipient (such as the AP MLD or the Non-AP MLD), and then the MLD MAC of the recipient may transmit the MLME-GDMACCESSTEARDOWN.indication primitive to the MLD SME of the recipient to tear down the GDM access.

In some embodiments of the present disclosure, when an MLD upper layer of the GDM access issues an indication, a GDM access status may be torn down. The originator and the recipient both set the GDM access status to a torn down status and apply the GDM access status to all enabled links between the MLDs.

In some embodiments of the present disclosure, as shown in FIG. 10, a multi-link GDM access enable establishment procedure between the AP MLD and the Non-AP MLD is as follows: the originator (such as the AP MLD or the Non-AP MLD) transmits the GDM access enable response frame to the recipient (such as the AP MLD or the Non-AP MLD) when detecting a game data packet and determining that the multi-link access is allowed. In this case, if the response frame fed back by the recipient agrees to perform the GDM access, the GDM access process is completed between the originator and the recipient, so that the data packet of the game service can be transmitted by using a plurality of links.

In some embodiments of the present disclosure, as shown in FIG. 11, a multi-link GDM access teardown establishment procedure between the AP MLD and the Non-AP MLD is as follows: when it is determined to tear down the GDM access, the originator (such as the AP MLD or the Non-AP MLD) transmits the GDM access enable teardown frame to the recipient (such as the AP MLD or the Non-AP MLD), to tear down the GDM access.

In summary, the technical solutions of some embodiments of the present disclosure are mainly applied in the field of wireless communication technologies, and some embodiments, to a scenario involving service congestion or weak communication link coverage that occur when a plurality of wireless terminals perform low-latency services in a Wi-Fi wireless network. The STA and the AP establish the multi-link transmission based on the data packet level by using a management message, so that the low-latency service can select better links or transmit replicas on the plurality of links, thereby improving transmission reliability and transmission efficiency of the service.In some embodiments of the present disclosure, three new management messages are created to establish a multi-link transmission link based on the data packet level between the STA and the AP, and six new primitives are added to support creation of the three management messages. In some embodiments of the present disclosure, a new configuration field dot11EHTGDMAccessActivated is added to indicate that the STA and the AP each have a capability to support the multi-link transmission based on the data packet level, and GDM access support is added to MAC capabilities and set to true. In some embodiments of the present disclosure, the STA or the AP transmits the GDM access enable request frame to the peer, after receiving the frame, the peer transmits the GDM access enable response frame to the transmitter to inform whether to accept mapping the latency service to two or more links for data transmission, so that the low-delay service can be transmitted on two or more links based on a data packet expected by the STA or the AP or a better link can be selected for transmission in cases of weak network coverage or network congestion.

Through optimization of some embodiments of the present disclosure, particularly, in a process of transmitting the low-latency service, transmission of the service data packet on two or more links instead of transmission of all data packets on the plurality of links can be adaptively optimized based on a network coverage status and a service congestion status. In some embodiments, in scenarios of weak wireless network coverage or congestion of ongoing services, thereby improving transmission reliability of the low-latency data service packet and improving user experience.

In addition to the game service, the technical solutions of some embodiments of the present disclosure may also be applied to another multimedia service, such as a VR service, an AR service, an MR service, an XR service, an XRM service, or a CR service.

The following describes apparatus embodiments of the present disclosure, and the apparatus embodiment may be configured for performing the multi-link communication methods in the foregoing embodiments of the present disclosure. For details not disclosed in the apparatus embodiments of the present disclosure, refer to the foregoing multi-link communication method embodiments of the present disclosure.

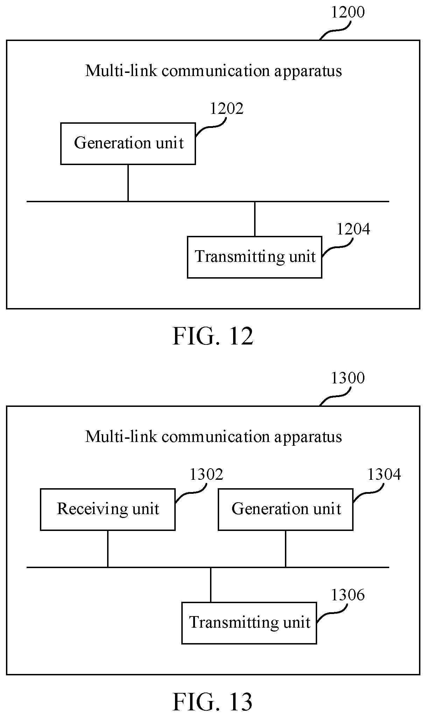

FIG. 12 is a block diagram of a multi-link communication apparatus according to some embodiments of the present disclosure. The multi-link communication apparatus may be disposed in an apparatus having a wireless communication function. The apparatus having the wireless communication function may be the AP MLD or may be the non-AP MLD shown in FIG. 1.

With reference to FIG. 12, a multi-link communication apparatus 1200 according to some embodiments of the present disclosure is provided. The apparatus includes a generation unit 1202 and a transmitting unit 1204.

The generation unit 1202 is configured to generate a first request frame at a media access control (MAC) layer of the multi-link communication apparatus, the first request frame being configured for requesting to start multi-link transmission for a data packet of a specified type between the multi-link communication apparatus and a peer multi-link communication apparatus. The transmitting unit 1204 is configured to transmit, through the MAC layer of the multi-link communication apparatus, the first request frame to the peer multi-link communication apparatus.

FIG. 13 is a block diagram of a multi-link communication apparatus according to some embodiments of the present disclosure. The multi-link communication apparatus may be disposed in an apparatus having a wireless communication function. The apparatus having the wireless communication function may be the AP MLD or may be the non-AP MLD shown in FIG. 1.

With reference to FIG. 13, a multi-link communication apparatus 1300 according to some embodiments of the present disclosure is provided. The apparatus includes a receiving unit 1302, a generation unit 1304, and a transmitting unit 1306.

The receiving unit 1302 is configured to receive, at a media access control (MAC) layer of the multi-link communication apparatus, a first request frame transmitted by a peer multi-link communication apparatus, the first request frame being configured for requesting to start multi-link transmission for a data packet of a specified type between the peer multi-link communication apparatus and the multi-link communication apparatus. The generation unit 1304 is configured to generate, at the MAC layer of the multi-link communication apparatus, a response frame for the first request frame, the response frame being configured for indicating whether the multi-link communication apparatus allows to start the multi-link transmission for the data packet of the specified type. The transmitting unit 1306 is configured to transmit, by the MAC layer of the multi-link communication apparatus, the response frame to the peer multi-link communication apparatus.

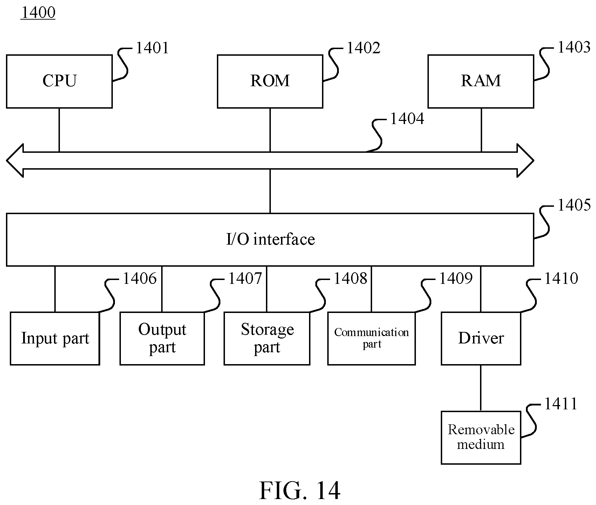

For specific functional implementation of each functional unit of the multi-link communication apparatus 1200 and 1300 provided in the foregoing embodiments of the present disclosure, refer to each of the foregoing embodiments, and details are not described herein again. FIG. 14 is a schematic diagram of a structure of a computer system of an electronic device suitable for implementing various embodiments of the present disclosure. The electronic device may be the apparatus having the wireless communication function in the foregoing embodiments.

A computer system 1400 of the electronic device shown in FIG. 14 is merely an example, and does not bring any limitation to the function and use scope of some embodiments of the present disclosure.

As shown in FIG. 14, the computer system 1400 may include a central processing unit (CPU) 1401, which may perform various suitable actions and processing based on a program stored in a read-only memory (ROM) 1402 or a program loaded from a storage part 1408 to a random access memory (RAM) 1403, for example, perform the method described in the foregoing embodiments. The RAM 1403 further has various programs and data for a system operation stored therein. The CPU 1401, the ROM 1402, and the RAM 1403 are connected to each other through a bus 1404. An input/output (I/O) interface 1405 is also connected to the bus 1404.

The following components may be connected to the I/O interface 1405: an input part 1406 including a keyboard, a mouse, and the like; an output part 1407 including a cathode ray tube (CRT), a liquid crystal display (LCD), a speaker, and the like; a storage part 1408 including a hard disk and the like; and a communication part 1409 including a network interface card such as a local area network (LAN) card or a modem. The communication part 1409 performs communication processing by using a network such as the Internet. A driver 1410 is also connected to the I/O interface 1405 as required. A removable medium 1411, such as a magnetic disk, an optical disc, a magneto-optical disk, or a semiconductor memory, is mounted on the driver 1410, so that a computer program read from the removable medium is installed into the storage part 1408.

Particularly, according to some embodiments of the present disclosure, the processes described in the foregoing by referring to the flowcharts may be implemented as a computer software program. For example, this embodiment of the present disclosure includes a computer program product. The computer program product includes a computer program carried on a computer-readable medium, and the computer program is configured for performing the methods shown in the flowcharts. In such an embodiment, the computer program may be downloaded and installed from the network through the communication part 1409, and/or installed from the removable medium 1411. When the computer program is executed by the CPU 1401, the various functions defined in the system of the present disclosure are executed.

The computer-readable medium shown in this embodiment of the present disclosure may be a computer-readable signal medium, a computer-readable storage medium, or any combination thereof. The computer-readable storage medium may be, for example, but is not limited to, an electrical, a magnetic, an optical, an electromagnetic, an infrared, or a semiconductor system, apparatus or component, or any combination thereof. More specific examples of the computer-readable storage medium may include but are not limited to: an electrical connection having one or more conductors, a portable computer disk, a hard disk, an RAM, an ROM, an erasable programmable read only memory (EPROM), a flash memory, an optical fiber, a portable compact disc read-only memory (CD-ROM), an optical storage component, a magnetic storage component, or any appropriate combination thereof. In the present disclosure, the computer-readable storage medium may be any tangible medium including or storing the computer program, and the computer program may be used by or used in combination with an instruction execution system, apparatus, or component. In the present disclosure, the computer-readable signal medium may include a data signal transmitted in a baseband or as part of a carrier, and has a computer-readable computer program carried therein. The data signal propagated in such a way may be in a plurality of forms, including but not limited to, an electromagnetic signal, an optical signal, or any appropriate combination thereof. The computer-readable signal medium may further be any computer-readable medium other than the computer-readable storage medium. The computer-readable medium may transmit, propagate, or transmit the program used by or in combination with the instruction execution system, apparatus or component. The computer program included in the computer-readable medium may be transmitted by using any suitable media including but not limited to: a wireless medium, a wired medium, or any suitable combination thereof.

The flowcharts and block diagram in the accompanying drawings illustrate possible system architectures, functions, and operations that may be implemented by the system, the method, and the computer program product according to various embodiments of the present disclosure. Each block in the flowchart or the block diagram may represent a module, a program segment, or a part of code. The module, program segment, or part of code includes one or more executable instructions configured for implementing defined logical functions. In some implementations used as substitutes, functions specified in the blocks may be alternatively performed in a different order than that specified in the accompanying drawing. For example, two blocks shown in succession may actually be performed substantially in parallel, or may sometimes be performed in a reverse order, which depends on the functions involved. Each block in the block diagram or flowchart, and a combination of blocks in the block diagram or flowchart may be implemented by using a dedicated hardware-based system configured for performing a specified function or operation, or may be implemented by using a combination of dedicated hardware and the computer program.

The units involved in this embodiment of the present disclosure may be implemented by using software or may be implemented by using hardware, and the described units may further be provided in a processor. Names of these units do not constitute a limitation on the units in a case.

In another aspect, the present disclosure further provides a computer-readable medium. The computer-readable medium may be included in the electronic device described in the foregoing embodiments, or may exist alone without being mounted to the electronic device. The foregoing computer-readable medium carries one or more computer programs. The one or more computer programs, when executed by the electronic device, enable the electronic device to implement the methods described in the foregoing embodiments.

Although a plurality of modules or units of a device configured to perform actions are mentioned in the foregoing detailed description, such division is not mandatory. Actually, based on implementations of the present disclosure, features and functions of two or more modules or units described above may be specified in one module or unit. Conversely, the features and the functions of one module or unit described above may be further divided to be specified by the plurality of modules or units.

Through the descriptions of the foregoing implementations, a person skilled in the art easily understands that the exemplary implementations described herein may be implemented by using the software, or may be implemented by using the software in combination with hardware. Therefore, the technical solutions according to the implementations of the present disclosure may be embodied in a form of a software product. The software product may be stored in a non-volatile storage medium (which may be a CD-ROM, a universal serial bus (USB) disk, a removable hard disk, or the like) or on a network, including a plurality of instructions to enable an electronic device to perform the method according to the implementations of the present disclosure.

For example, the electronic device may be an apparatus having a wireless communication function, and then the apparatus having the wireless communication function may perform the multi-link communication method shown in FIG. 2 or FIG. 3.

Based on the present disclosure, a person skilled in the art may easily conceive of other implementation solutions of the present disclosure. The present disclosure is intended to cover any variations, uses, or adaptive changes of the present disclosure. These variations, uses, or adaptive changes follow the general principles of the present disclosure and include common general knowledge or common technical means in the art, which are not disclosed in the present disclosure.

The present disclosure is not limited to the precise structures described above and shown in the accompanying drawings, and various modifications and changes may be made without departing from the scope of the present disclosure. The scope of the present disclosure is limited by the appended claims only.

## Claims

1. A multi-link communication method, performed by a multi-link device, the method comprising:
generating, by a medium access control (MAC) layer of the multi-link device, a first request frame, the first request frame being configured for requesting to start a multi-link transmission for a data packet of a specified type between the multi-link device and a peer multi-link device; and
transmitting, by the MAC layer of the multi-link device, the first request frame to the peer multi-link device.

2. The multi-link communication method according to claim 1, wherein the generating the first request frame comprises:
receiving, by the MAC layer of the multi-link device, an enable request transmitted by a station management entity (SME) of the multi-link device for performing the multi-link transmission on the data packet of the specified type; and
generating the first request frame based on the enable request.

3. The multi-link communication method according to claim 1 or 2, wherein
when the multi-link device is an access point device, the enable request comprises at least one of a media access control (MAC) address of a non-access point station device, a dialog token configured for performing the multi-link transmission on the data packet of the specified type, and a parameter configured for performing the multi-link transmission on the data packet of the specified type; and
when the multi-link device is the non-access point station device, the enable request comprises at least one of a MAC address of the access point device associated with the non-access point station device, and the dialog token configured for performing the multi-link transmission on the data packet of the specified type.

4. The multi-link communication method according to any one of claims 1 to 3, wherein the first request frame comprises at least one of:
a field configured for indicating a category of the first request frame, a field configured for indicating the first request frame to use a protected extremely high throughput (EHT) action, a field configured for indicating a dialog token, and a field configured for indicating whether to start the multi-link transmission on the data packet of the specified type.

5. The multi-link communication method according to any one of claims 1 to 4, further comprising:
receiving a response frame transmitted by the peer multi-link device for the first request frame, the response frame being configured for indicating whether the peer multi-link device allows to start the multi-link transmission for the data packet of the specified type.

6. The multi-link communication method according to claim 5, wherein the response frame comprises at least one of:
a field configured for indicating a category of the response frame, a field configured for indicating the response frame to use the protected extremely high throughput action, a field configured for indicating a dialog token, a field configured for indicating whether to start the multi-link transmission for the data packet of the specified type, and a status code field configured for indicating a response result, and
wherein
the status code field is configured for indicating one of: allowing to start the multi-link transmission for the data packet of the specified type, rejecting to start the multi-link transmission for the data packet of the specified type, and a reason for rejecting to start the multi-link transmission for the data packet of the specified type.

7. The multi-link communication method according to claim 5 or 6, wherein after receiving the response frame for the first request frame, the multi-link communication method further comprises:
transmitting, by the MAC layer of the multi-link device to the SME of the multi-link device, an enable confirmation of performing the multi-link transmission on the data packet of the specified type.

8. The multi-link communication method according to claim 7, wherein the enable confirmation comprises the status code field configured for indicating the response result; and
wherein the status code field is configured for indicating one of the following information: allowing to start the multi-link transmission for the data packet of the specified type, rejecting to start the multi-link transmission for the data packet of the specified type, and the reason for rejecting to start the multi-link transmission for the data packet of the specified type.

9. The multi-link communication method according to any one of claims 1 to 8, further comprising:
generating, by the MAC layer of the multi-link device, a second request frame, the second request frame being configured for requesting to tear down established multi-link transmission for the data packet of the specified type between the multi-link device and the peer multi-link device; and
transmitting the second request frame to the peer multi-link device.

10. The multi-link communication method according to claim 9, wherein the generating the second request frame comprises:
receiving, by the MAC layer of the multi-link device, a tear down request transmitted by the SME of the multi-link device for the multi-link transmission of the data packet of the specified type; and
generating the second request frame based on the tear down request.

11. The multi-link communication method according to any one of claims 1 to 10, further comprising:
when receiving a service data packet, determining, by the MAC layer of the multi-link device, whether the service data packet is the data packet of the specified type based on a value of a specified flag bit comprised in a packet header of the service data packet; and
performing the multi-link transmission on the service data packet based on determining that the service data packet is the data packet of the specified type;
wherein
the specified flag bit comprising a flag bit in a type of service field in the packet header.

12. The multi-link communication method according to any one of claims 1 to 11, wherein the generating the first request frame comprises:
obtaining a service access permission of a subscription service provider network (SSPN) for the data packet of the specified type; and
generating the first request frame when it is determined, based on the service access permission, that the SSPN allows to perform the multi-link transmission on the data packet of the specified type.

13. A multi-link communication method, performed by a multi-link device, the method comprising:
receiving, by a media access control (MAC) layer of the multi-link device, a first request frame transmitted by a peer multi-link device, the first request frame being configured for requesting to start a multi-link transmission for a data packet of a specified type between the peer multi-link device and the multi-link device;
generating, by the MAC layer of the multi-link device, a response frame for the first request frame, the response frame being configured for indicating whether the multi-link device allows to start the multi-link transmission for the data packet of the specified type; and
transmitting, by the MAC layer of the multi-link device, the response frame to the peer multi-link device.

14. The multi-link communication method according to claim 13, wherein the generating the response frame for the first request frame comprises:
transmitting, by the MAC layer of the multi-link device after receiving the first request frame, an enable indication for performing the multi-link transmission on the data packet of the specified type to a station management entity (SME) of the multi-link device; and
generating, by the MAC layer of the multi-link device, the response frame for the first request frame if an enable response that is for performing the multi-link transmission on the data packet of the specified type and that is transmitted by the SME is received.

15. The multi-link communication method according to claim 13 or 14, further comprising:
receiving, by the MAC layer of the multi-link device, a second request frame transmitted by the peer multi-link device, the second request frame being configured for requesting to tear down the established multi-link transmission for the data packet of a specified type between the peer multi-link device and the multi-link device; and
transmitting, to the SME, a tear down indication for the multi-link transmission on the data packet of the specified type.

16. A multi-link communication apparatus, comprising:
a generation unit, configured to generate a first request frame at a media access control (MAC) layer of the multi-link communication apparatus, the first request frame being configured for requesting to start a multi-link transmission for a data packet of a specified type between the multi-link communication apparatus and a peer multi-link communication apparatus; and
a transmitting unit, configured to transmit, through the MAC layer of the multi-link communication apparatus, the first request frame to the peer multi-link communication apparatus.

17. A multi-link communication apparatus, comprising:
a receiving unit, configured to receive, at a media access control (MAC) layer of the multi-link communication apparatus, a first request frame transmitted by a peer multi-link communication apparatus, the first request frame being configured for requesting to start a multi-link transmission for a data packet of a specified type between the peer multi-link communication apparatus and the multi-link communication apparatus;
a generation unit, configured to generate, at the MAC layer of the multi-link communication apparatus, a response frame for the first request frame, the response frame being configured for indicating whether the multi-link communication apparatus allows to start the multi-link transmission for the data packet of the specified type; and
a transmitting unit, configured to transmit, through the MAC layer of the multi-link communication apparatus, the response frame to the peer multi-link communication apparatus.

18. A computer-readable medium, having a computer program stored therein, the computer program, when being executed by a processor, implementing the multi-link communication method according to any one of claims 1 to 15.

19. An electronic device, comprising:
one or more processors; and
a memory, configured to store one or more computer programs, the one or more computer programs, when being executed by the one or more processors, enabling the electronic device to implement the multi-link communication method according to any one of claims 1 to 15.

20. A computer program product, comprising a computer program, the computer program being stored in a computer-readable storage medium, and a processor of an electronic device reading and executing the computer program from the computer-readable storage medium, to enable the electronic device to perform the multi-link communication method according to any one of claims 1 to 15.
